# FASCICULE DE BREVET EUROPEEN

(11) **EP 3 943 684 B1**
(45) Date de publication et mention de la délivrance du brevet: **19.07.2023**
(21) Numéro de dépôt: 21187265.0
(22) Date de dépôt: 22.07.2021
(51) Int. Cl.: E04D 13/14, E04D 13/17, B32B 7/12, E04D 1/36

(54) **BAVETTE ET DISPOSITIF D'ÉTANCHÉITÉ POUR UNE TOITURE, ET PROCÉDÉ D'ASSEMBLAGE D'UN TEL DISPOSITIF**
ABWEISBLECH UND DICHTUNGSVORRICHTUNG FÜR EIN DACH UND VERFAHREN ZUR MONTAGE EINER SOLCHEN VORRICHTUNG
FLASHING FLAP AND SEALING DEVICE FOR A ROOF, AND METHOD FOR ASSEMBLING SUCH A DEVICE

(30) Priorité: 23.07.2020 FR 2007765
(43) Date de publication de la demande: 26.01.2022
(73) Titulaire: Edilians, 69570 Dardilly (FR)
(72) Inventeur: CIAURRIZ, Adrian, 69009 Lyon (FR); MARTINAT, Eric, 01600 Trévoux (FR)
(74) Mandataire: Germain Maureau

(56) Documents cités:
- EP-A1- 1 152 099
- EP-A2- 1 041 215
- EP-A2- 1 607 214
- CA-A1- 2 549 473
- DE-U1- 9 111 300
- DE-U1- 9 216 618
- DE-U1- 20 015 297
- US-A- 4 091 135
- US-B1- 6 360 506

## Description

### Domaine technique de l'invention

La présente invention concerne le domaine technique des toitures et plus particulièrement un accessoire de toiture telle une bavette, ou un dispositif d'étanchéité. L'invention concerne aussi un procédé d'assemblage et un procédé de mise en oeuvre d'un tel dispositif d'étanchéité.

### Etat de la technique

La toiture d'un bâtiment comprend généralement au moins un pan et préférentiellement deux pans couverts de tuiles. Chaque pan est incliné selon un angle déterminé. La fonction première des tuiles est de former une couche imperméable aux intempéries, et plus particulièrement à la pénétration des eaux de pluie dans l'habitation. Cette étanchéité est obtenue soit par emboîtement de tuiles de plain carré les unes sur les autres par des chicanes, soit par un fort taux de recouvrement des tuiles de plain carré ou d'ardoises les unes sur les autres. Dans tous les cas, l'étanchéité nécessaire à la pluie se traduit également par une étanchéité à l'air.

La toiture comprend parfois d'autres éléments comme une cheminée, ou des panneaux photovoltaïques, et généralement une ligne de faitage en partie supérieure du pan. Cette ligne de faîtage suit la même direction que la panne faîtière de la charpente du toit du bâtiment. Des tuiles faîtières habillent le faîte, partie haute du toit correspondant à l'arête formée par la rencontre entre les deux pans de la toiture, dans un but esthétique et dans un objectif d'étanchéité à l'eau. La tuile faîtière vient fermer de manière étanche la ligne de jonction supérieure de deux pans de toiture, et devient ainsi une ligne de partage et d'évacuation des eaux pluviales.

Pour faire la liaison entre ces éléments de toiture et le ou les pans de toiture sur lesquelles ils reposent, il est connu d'utiliser des pièces de liaison appelées closoir, solin, abergement ou cadre support pour les panneaux photovoltaïques. Ces pièces de liaison sont disposées à l'interface entre les tuiles de chaque pan et l'élément de toiture. Par exemple dans le cas du closoir, il est disposé sous les tuiles faîtières, et se présente globalement sous la forme d'un profil de grande longueur de section en V inversé s'étendant globalement sur toute la ligne de faîtage du toit. Les pièces de liaison sont généralement obtenues par une tôle souple, parfois gaufrée transversalement, que l'on vient dérouler et rabattre sur chaque pan de toiture. Elles peuvent également être formées par des éléments longs rigides formés d'une tôle métallique prolongée sur les côtés par des bavettes souples, gaufrées, ces bavettes étant rabattues sur chaque pan de toiture. La bavette épousant la surface du toit, donne une étanchéité suffisante, à l'eau et à l'air.

Il est connu de l'état de la technique d'utiliser des pièces de liaison généralement constituées d'un corps en métal (acier, zinc) sur lequel est fixé de manière mécanique (emboutissage, sertissage) des bavettes qui peuvent être en plomb ou en aluminium.

Lorsqu'elles sont en aluminium, la légèreté des bavettes implique l'ajout d'un cordon d'adhésif, par exemple en butyl (colle) permettant de coller la bavette sur les éléments de couverture lors de la mise en oeuvre. Cette solution donne satisfaction en ce qu'elle permet de proposer une liaison étanche entre deux éléments constitutifs d'une toiture.

Dans les régions fortement ventées, les bavettes en plomb sont appréciées car, de par leur poids elles ne se relèvent pas sous la force du vent, contrairement aux bavettes constituées d'aluminium. En effet, pour des raisons de simplicité de mise en oeuvre, la couche d'adhésif présente sous les bavettes en aluminium est soit trop mince soit répartie sur une zone trop étroite de la bavette.

Toutefois, les bavettes en plomb présentent des inconvénients dans la mise en oeuvre et la compatibilité avec la toiture. Le plomb est un matériau lourd et peu malléable, ce qui rend sa mise en oeuvre longue et fatigante. Par ailleurs, la jonction entre la bavette et le corps en métal peut être fragile. Le plomb présente en outre une incompatibilité avec certains matériau constitutif d'une toiture, comme le bois, et son utilisation pose des contraintes environnementales.

Par ailleurs, DE 200 15 297 U1 divulgue un exemple de matériau plastique déformable de toiture et DE 92 16 618 U1 divulgue un dispositif d'étanchéité de toiture où une bavette est solidarisée à un corps rigide.

### Objet de l'invention

La présente invention a pour but de proposer une solution qui réponde à tout ou partie des problèmes précités :
Ce but peut être atteint grâce à la mise en oeuvre d'une bavette selon la revendication 1, notamment comprenant une première partie de bavette destinée à coopérer au moins partiellement avec un corps rigide externe, et une deuxième partie de bavette destinée à coopérer avec une toiture ; ladite bavette étant déformable et comprenant une couche support extérieure qui est semi-rigide et déformable, la couche support extérieure présentant une face d'adhésion dirigée vers la toiture sur laquelle est déposée une couche d'adhésion intérieure constituée d'un matériau configuré pour adhérer à la toiture ; ladite bavette étant remarquable en ce que la couche d'adhésion de la première partie de bavette est recouverte au moins partiellement d'une couche de passivation permanente, la couche de passivation permanente étant configurée pour être extensible et étant fixée de manière irréversible à la couche d'adhésion, et en ce que la couche d'adhésion de la deuxième partie de la bavette destinée à coopérer avec la toiture est recouverte au moins partiellement d'un film de protection temporaire, ce film de protection temporaire étant destiné à être désolidarisé de la couche d'adhésion.

Par « permanente », on entend que la couche de passivation est fixée de manière inamovible à la couche d'adhésion, et qu'elle ne peut pas être désolidarisée de ladite couche d'adhésion. En d'autres termes, la couche de passivation permanente est solidaire de la couche d'adhésion, et adhère donc de manière irréversible à la couche d'adhésion.

De manière avantageuse, la couche de passivation solidaire de la couche d'adhésion permet :
- De passiver la portion de la couche d'adhésion qui est recouverte par la couche de passivation, et ce pour supprimer le pouvoir adhésif de la couche d'adhésion en cet endroit ;
- De renforcer mécaniquement la bavette notamment au niveau de la première partie de bavette pour permettre sa coopération avec le corps rigide.

Ainsi, la couche de passivation permet à la fois de passiver la surface adhésive pour faciliter la manipulation de la bavette, mais elle permet également de renforcer mécaniquement ladite bavette. Cela est particulièrement avantageux lorsque la bavette est perforée pour être attachée au corps rigide.

Selon un mode de réalisation, la couche de passivation est une couche distincte du film de protection temporaire. De façon avantageuse, la couche de passivation est différente du film de protection temporaire.

Selon un mode de réalisation, ladite couche support extérieure est constituée d'au moins un film ou d'une trame semi-rigide apte à s'allonger suivant au moins une direction.

De préférence, la couche support extérieure est constituée d'au moins un film d'aluminium crêpé.

Par ailleurs, ladite couche d'adhésion recouvre la face d'adhésion sur au moins 50% de la surface totale de la face d'adhésion, et plus particulièrement sur au moins 90% de la surface totale de la face d'adhésion.

De préférence, la couche de passivation permanente recouvre entre 20 et 80% de la face d'adhésion.

De manière avantageuse, la couche de passivation permanente est constituée d'un film étirable jusqu'à au moins 100% de sa longueur initiale sans se déchirer.

Ainsi, et de manière avantageuse, il est possible d'étirer la première partie de bavette pour en faciliter la manipulation, sans risquer de déchirer la couche de passivation permanente.

Selon un mode de réalisation, la couche de passivation permanente est constituée d'un matériau polymère, et notamment sans que ce soit limitatif, le polychlorure de vinylidéne, le polychlorure de vinyle, le polychlorure de vinyle plastifié, le polyéthylène, le polyéthylène additivé, ou une polyoléfine.

Selon un mode de réalisation, le film de protection temporaire comporte un revêtement anti-adhérant configuré pour permettre un retrait du film de protection temporaire de la couche d'adhésion, c'est-à-dire une fixation réversible du film de protection temporaire sur la couche d'adhésion.

Selon un mode de réalisation, le film de protection temporaire est un film papier enduit d'un revêtement anti-adhérant, par exemple de type polyéthylène.

Par ailleurs, le film de protection temporaire recouvre partiellement la couche de passivation permanente.

De plus, la couche support extérieure est configurée pour être résistante aux rayons ultraviolets, et pour être peinte.

Un autre objet de l'invention concerne un dispositif d'étanchéité destiné à réaliser une jonction étanche lorsqu'il coopère avec une toiture, ledit dispositif d'étanchéité comprenant une bavette selon l'invention, et un corps rigide solidarisé de manière étanche, et avantageusement de manière irréversible, avec la bavette au niveau de la première partie de bavette.

De manière avantageuse, le corps rigide comprend des moyens de fixation de la bavette.

Selon un mode de réalisation, lesdits moyens de fixation comprennent des dents configurées pour agrafer la bavette au corps rigide au niveau de la première partie de bavette.

Chaque dent comprend une extrémité fixe solidaire du corps rigide, et une extrémité libre configurée pour agrafer la bavette.

Par ailleurs, le corps rigide comprend des ouvertures de fixation configurées pour permettre le passage des extrémités libres des dents.

Ledit dispositif d'étanchéité suivant l'invention pourra être appliqué à un closoir, un solin, une rive, un raccord, un abergement, ou un cadre support de panneau photovoltaïque.

Un autre objet de l'invention concerne un procédé d'assemblage d'un dispositif d'étanchéité selon l'invention, dans lequel le corps rigide comprend des dents, l'assemblage étant réalisé par agrafage de la première partie de bavette au corps rigide par l'intermédiaire desdites dents.

Un dernier objet de l'invention concerne un procédé de mise en oeuvre d'un dispositif d'étanchéité sur une toiture, le procédé comprenant :
- une étape de fourniture d'un corps rigide solidarisé à au moins une bavette selon l'invention ;
- une étape de mise en place du corps rigide et de la bavette sur la toiture ;
- une étape de retrait du film de protection temporaire ;
- une étape d'application de la bavette sur la toiture au niveau de la deuxième partie de bavette de manière à faire adhérer la bavette sur la toiture selon une forme complémentaire de la toiture.

### Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
Figure 1 est une vue schématique en coupe d'une bavette selon un mode de réalisation de l'invention ;
Figure 2 est une vue schématique de dessous de la bavette de la figure 1 ;
Figure 3 est une vue schématique de dessous d'un dispositif d'étanchéité comprenant une bavette selon un mode de réalisation de l'invention ;
Figure 4 est une vue schématique d'une application d'un dispositif d'étanchéité selon un mode de réalisation appliqué à un closoir disposé sur une toiture ;
Figure 5 est une vue schématique d'une application d'un dispositif d'étanchéité selon un autre mode de réalisation appliqué à un closoir ;
Figure 6 est une vue schématique d'une application d'un dispositif d'étanchéité selon un autre mode de réalisation appliqué à un solin.

### Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux, dans la mesure où ils tombent dans l'étendue des revendications.

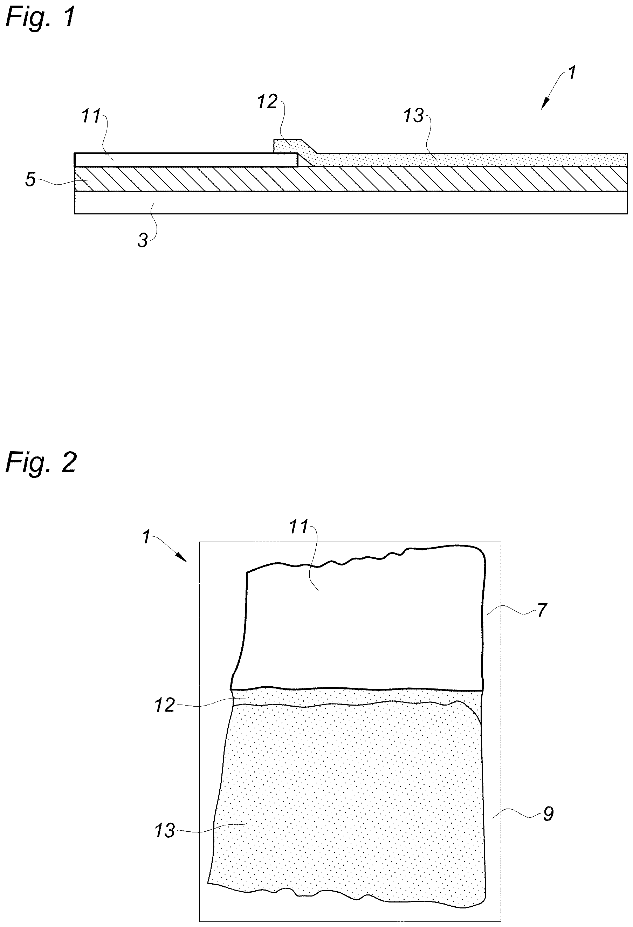

Comme illustré sur les figures 1 à 3, l'invention concerne une bavette 1 et un dispositif d'étanchéité noté « D » comprenant une telle bavette 1, ladite bavette 1 étant destinée à coopérer au moins partiellement avec une toiture notée « T ».

La bavette 1 comprend notamment un support semi-rigide 3 déformable par exemple constitué d'aluminium, et plus particulièrement d'aluminium crêpé. La bavette 1 présente en outre une face d'adhésion dirigée vers la toiture T et sur laquelle est déposée une couche d'adhésion 5 constituée d'un matériau configuré pour adhérer à la toiture T, par exemple le butyl. La couche d'adhésion 5 peut également comprendre tout autre adhésif connu de l'homme du métier présentant des performances similaires. De manière avantageuse, la couche d'adhésion 5 peut recouvrir la face d'adhésion sur au moins 50% de la surface totale de la face d'adhésion, et plus particulièrement sur au moins 90% de la surface totale de la face d'adhésion. Selon un mode de réalisation particulier, la couche d'adhésion 5 recouvre totalement la face d'adhésion. De cette manière, la surface de la couche d'adhésion 5 en contact avec la toiture T est maximisée, ce qui confère une meilleure accroche de la bavette 1 sur la toiture T.

La bavette 1 comprend une première partie de bavette 7 configurée pour coopérer au moins partiellement avec un corps rigide 15 et une deuxième partie de bavette 9 destinée à coopérer au moins partiellement avec la toiture T.

La couche d'adhésion 5 est recouverte au moins partiellement d'une couche de passivation permanente 11 sur la première partie de bavette 7. Par «_permanente_», on entend que la couche de passivation 11 est fixée de manière inamovible à la couche d'adhésion 5, et qu'elle ne peut donc pas être désolidarisée de ladite couche d'adhésion 5. En d'autres termes, la couche de passivation permanente 11 est solidaire de la couche d'adhésion 5, et adhère donc de manière irréversible à la couche d'adhésion 5. Ladite couche de passivation permanente 11 est configurée pour être extensible. Par exemple, la couche de passivation permanente 11 est constituée d'un matériau polymère, et notamment, sans que ce soit limitatif, le polychlorure de vinylidéne, le polychlorure de vinyle, le polychlorure de vinyle plastifié, le polyéthylène additivé ou encore une polyoléfine, permettant de former un film étirable jusqu'à au moins 100% de sa longueur initiale sans se déchirer.

La couche d'adhésion 5 est par ailleurs recouverte au moins partiellement d'un film de protection temporaire 13 majoritairement sur la deuxième partie de bavette 9, le film de protection temporaire 13 étant destiné à être désolidarisé de la couche d'adhésion 5. Le film de protection temporaire 13 peut par exemple recouvrir au moins 50% de la face d'adhésion. Il peut par ailleurs être prévu que le film de protection temporaire 13 recouvre partiellement la couche de passivation permanente 11 selon une zone de recouvrement 12. Il est donc bien compris que le film de protection temporaire 13 peut recouvrir partiellement la couche d'adhésion 5 d'une part et partiellement la couche de passivation permanente 11 d'autre part. De cette manière, le film de protection temporaire 13 adhère à la couche d'adhésion 5, et peut simplement être décollé par préhension du film de protection temporaire 13 au niveau de la zone de recouvrement 12 de la couche de passivation permanente 11 et du film de protection temporaire 13.

Comme indiqué précédemment, la bavette 1 est comprise dans le dispositif d'étanchéité D. Le dispositif d'étanchéité D comprend un corps rigide 15, par exemple constitué d'acier ou de zinc, comprenant des éléments de fixations configurés pour fixer le corps rigide 15 et la bavette 1. La bavette 1 peut notamment être cousue, et/ou collée, et/ou emboutie, et/ou sertie au corps rigide 15.

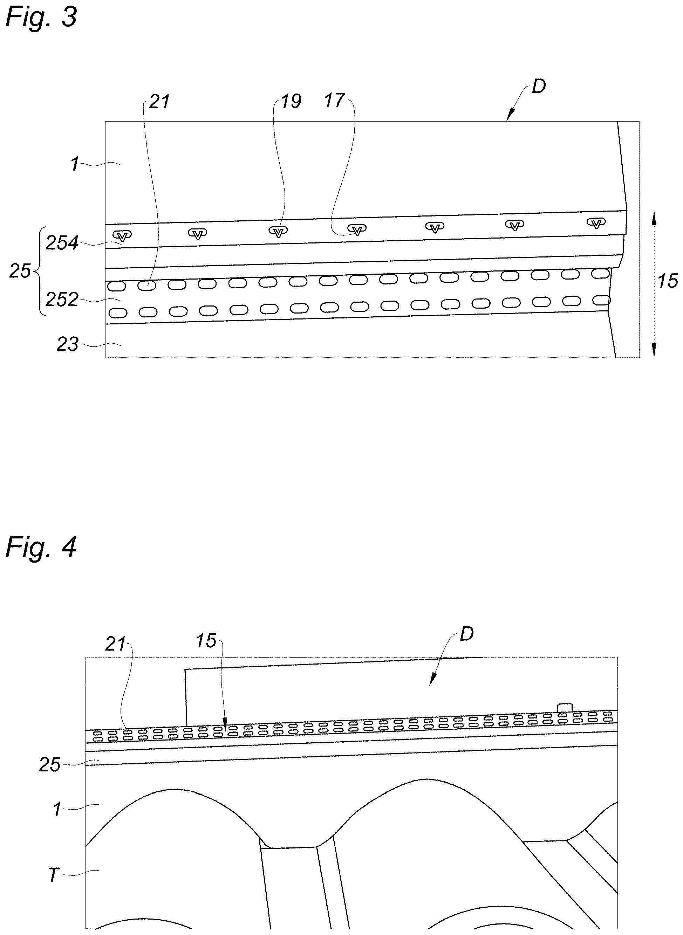

Comme illustré sur la figure 3, les éléments de fixation peuvent comprendre des dents 17 configurées pour agrafer la bavette 1 et le corps rigide 15. Chaque dent 17 peut comprendre une extrémité fixe solidaire du corps rigide 15, et une extrémité libre configurée pour agrafer la bavette 1. De manière avantageuse, l'extrémité libre peut présenter une diminution de section de manière à pouvoir perforer la bavette 1. Par exemple, l'extrémité libre peut être pointue. Des ouvertures de fixation 19 peuvent être ménagées dans le corps rigide 15, et configurées pour permettre le passage d'extrémités libres des dents 17. Selon le mode de réalisation illustré sur la figure 3, l'extrémité fixe de chaque dents 17 est disposée du côté de la bavette 1, et chaque dent 17 présente une forme recourbée de manière à ce que les extrémités libres des dents 17 viennent s'insérer dans les ouvertures de fixation 19. De cette manière, les dents 17 peuvent être configurées pour agrafer la bavette 1 et le corps rigide 15 au niveau de la première partie de bavette 7.

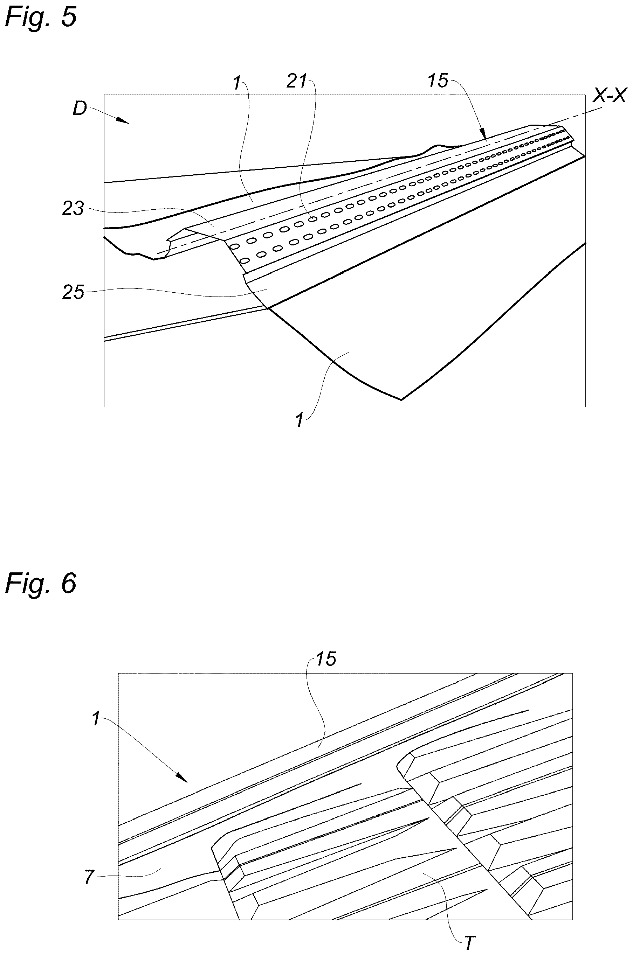

En références aux figures 4 et 5, le dispositif d'étanchéité D peut être appliqué à un closoir destiné à être disposé sous une ligne de tuiles faitières d'une toiture. Le closoir peut notamment présenter un profil symétrique selon un axe longitudinal X-X médian. Le corps rigide 15 comprend une portion centrale 23 préférentiellement plane destinée à être coiffée par la tuile faitière. Deux pans 25 agencés de part et d'autre de la portion centrale 23 s'étendent latéralement et sont munis des éléments de fixation. La figure 5 illustre un mode de réalisation dans lequel le closoir comprend un corps rigide 15 et deux bavettes 1 fixées chacune au corps rigide 15 par chacun des pans 25. Chaque pan 25 peut comprendre une zone de ventilation 252 dans laquelle sont ménagées des ouvertures de ventilation 21 configurées pour ventiler l'intérieur de la ligne de tuiles faitières. En particulier, le corps rigide 15 peut comprendre une pluralité d'ouvertures de ventilation 21 ménagées dans le corps rigide 15 de manière à proposer une ventilation efficace de l'intérieur de la ligne de tuiles faitières.

Les pans 25 peuvent également comprendre une zone de fixation 254 comprenant les moyens de fixation. Chaque pan 25 peut comprend les ouvertures de fixation 19 ménagées dans la zone de fixation 254, et configurées pour permettre le passage d'extrémités libres des dents 17. Ainsi, l'extrémité fixe de chaque dent 17 est disposée du côté de la bavette 1, et chaque dent 17 présente une forme recourbée de manière à ce que les extrémités libres des dents 17 viennent s'insérer dans les ouvertures de fixation 19 ménagées entre les extrémités fixes des dents 17 et la zone de ventilation 252.

Le mode de réalisation appliqué à un closoir tel que décrit ci-dessus peut être simplement adapté par l'homme du métier à un dispositif d'étanchéité comme un solin, une rive, un abergement ou un cadre support de panneau photovoltaïque.

A cet égard, en référence à la figure 6, le dispositif d'étanchéité D peut être appliqué à un solin destiné à être disposé sur un mur surplombant une toiture. Ledit solin comporte un corps rigide 15, apte à fixé sur un mur au droit d'une toiture T, solidarisé de manière étanche avec la bavette 1 au niveau de la première partie de bavette 7. De la même manière que précédemment, le corps rigide 15 comprend des moyens de fixation de la bavette 1 tels que des dents configurées pour agrafer la bavette au corps rigide au niveau de la première partie de bavette 7 ou tous autres moyens de fixation équivalent précédemment décrits, tels qu'un pli ou des moyens pour fixer la bavette 1 au corps rigide 15 au niveau de la première partie de la bavette 7 par exemple. Par ailleurs, de la même manière que précédemment, ladite bavette 1 est déformable et comprend une couche support extérieure 3 qui est semi-rigide et déformable. La couche support extérieure 3 présente une face d'adhésion dirigée vers la toiture T sur laquelle est déposée une couche d'adhésion 5 intérieure constituée d'un matériau configuré pour adhérer à la toiture T, ladite couche d'adhésion 5 de la première partie de bavette 7 étant recouverte au moins partiellement d'une couche de passivation permanente 11, la couche de passivation permanente 11 étant configurée pour être extensible, et ladite couche d'adhésion 5 de la deuxième partie de la bavette 9 destinée à coopérer avec la toiture T étant recouverte au moins partiellement d'un film de protection temporaire 13, ce film de protection temporaire 13 étant destiné à être obligatoirement désolidarisé de la couche d'adhésion 5 lors de la mise en oeuvre sur la toiture.

Les dispositions précédemment décrites permettent de proposer une bavette 1 présentant une mise en oeuvre aisée due à l'adhésion améliorée de la deuxième partie de bavette 9 et à l'extensibilité améliorée sur la première partie de bavette 7. La bavette 1 permet ainsi une liaison étanche à l'eau des pans de toiture T, et la présence de la couche d'adhésion 5 empêche la bavette 1 de se relever lorsqu'elle est soumise à des aléas climatiques comme par exemple un vent fort.

De manière synergique, la présence du corps rigide 15 permet de garantir une meilleure stabilité et une bonne tenue dans le temps.

Selon un mode de réalisation, le support semi-rigide 3 déformable est constitué d'un matériau permettant d'assurer un taux de marouflage compris entre 20% et 80% et notamment sensiblement égal à 60%.

L'utilisation d'aluminium crêpé comme matériau constitutif du support semi-rigide 3 déformable permet d'obtenir une bavette 1 assurant un taux de marouflage supérieur à 60%, tout en réduisant la masse de la bavette 1.

L'invention concerne également un procédé de mise en oeuvre d'un dispositif d'étanchéité D sur une toiture T, le procédé comprenant :
- une étape de fourniture d'un corps rigide 15 solidarisé à au moins une bavette 1 telle que décrite précédemment ;
- une étape de mise en place du corps rigide 15 et de la bavette 1 sur la toiture T;
- une étape de retrait du film de protection temporaire 13 ;
- une étape d'application de la bavette 1 sur la toiture T au niveau de la deuxième partie de bavette 9 de manière à faire adhérer la bavette 1 sur la toiture T selon une forme complémentaire de la toiture T.

## Revendications

1. Bavette (1) comprenant une première partie de bavette (7) destinée à coopérer au moins partiellement avec un corps rigide (15) externe, et une deuxième partie de bavette (9) destinée à coopérer avec une toiture (T);
ladite bavette (1) étant déformable et comprenant une couche support extérieure (3) qui est semi-rigide (3) et déformable, ladite couche support extérieure (3) présentant une face d'adhésion dirigée vers la toiture (T) sur laquelle est déposée une couche d'adhésion (5) intérieure constituée d'un matériau configuré pour adhérer à la toiture (T), telle que la couche d'adhésion (5) de la deuxième partie de la bavette (9) destinée à coopérer avec la toiture (T) est recouverte au moins partiellement d'un film de protection temporaire (13), ce film de protection temporaire (13) étant destiné à être désolidarisé de la couche d'adhésion (5),
**caractérisée en ce que** la couche d'adhésion (5) de la première partie de bavette (7) est recouverte au moins partiellement d'une couche de passivation permanente (11), la couche de passivation permanente (11) étant extensible et étant fixée de manière irréversible à la couche d'adhésion (5).

2. Bavette (1) selon la revendication 1, **caractérisée en ce que** la couche support extérieure (3) est constituée d'au moins un film ou d'une trame semi-rigide apte à s'allonger suivant au moins une direction et, de préférence, d'au moins un film d'aluminium crêpé.

3. Bavette (1) selon l'une quelconque des revendications 1 ou 2, **caractérisée en ce que** la couche d'adhésion (5) recouvre la face d'adhésion sur au moins 50% de la surface totale de la face d'adhésion, et plus particulièrement sur au moins 90% de la surface totale de la face d'adhésion.

4. Bavette (1) selon l'une quelconque des revendications 1 à 3, **caractérisée en ce que** la couche de passivation permanente (11) recouvre entre 20 et 80% de la face d'adhésion.

5. Bavette (1) selon l'une quelconque des revendications 1 à 4, **caractérisée en ce que** la couche de passivation permanente (11) est constituée d'un film étirable jusqu'à au moins 100% de sa longueur initiale sans se déchirer.

6. Bavette (1) selon l'une quelconque des revendications 1 à 5, **caractérisée en ce que** le film de protection temporaire (13) recouvre partiellement la couche de passivation permanente (11).

7. Bavette (1) selon l'une quelconque des revendications 1 à 6, **caractérisée en ce que** la couche support extérieure (3) est configurée pour être résistante aux rayons ultraviolets, et pour être peinte.

8. Dispositif d'étanchéité (D) destiné à réaliser une jonction étanche lorsqu'il coopère avec une toiture (T) sous la forme d'un closoir, d'un solin, d'une rive, d'un raccord, d'un abergement, ou d'un cadre support de panneau photovoltaïque, ledit dispositif d'étanchéité (D) comprenant une bavette (1) selon l'une quelconque des revendications 1 à 7, et un corps rigide (15) solidarisé de manière étanche avec la bavette (1) au niveau de la première partie de bavette (7).

9. Dispositif d'étanchéité (D) selon la revendication 8, **caractérisé en ce que** le corps rigide (15) comprend des moyens de fixation de la bavette (1) qui comprennent des dents (17) configurées pour agrafer la bavette (1) au corps rigide (15) au niveau de la première partie de bavette (7), chaque dent (17) comprenant une extrémité fixe solidaire du corps rigide (15), et une extrémité libre configurée pour agrafer la bavette (1), et le corps rigide (15) comprenant des ouvertures de fixation (19) configurées pour permettre le passage des extrémités libres des dents (17), de sorte que l'assemblage est réalisé par agrafage de la première partie de bavette (7) au corps rigide (15) par l'intermédiaire desdites dents (17).

10. Procédé de mise en oeuvre d'un dispositif d'étanchéité (D) sur une toiture (T), le procédé comprenant :
- une étape de fourniture d'un corps rigide (15) solidarisé à au moins une bavette (1) selon l'une quelconque des revendications 1 à 7 ;
- une étape de mise en place du corps rigide (15) et de la bavette (1) sur la toiture (T) ;
- une étape de retrait du film de protection temporaire (13) ;
- une étape d'application de la bavette (1) sur la toiture (T) au niveau de la deuxième partie de bavette (9) de manière à faire adhérer la bavette (1) sur la toiture (T) selon une forme complémentaire de la toiture (T).

## Patentansprüche

1. Abweisblech (1), einen ersten Teil des Abweisbleches (7) umfassend, der dazu bestimmt ist, mindestens teilweise mit einem externen starren Körper (15) zusammenzuwirken, und einen zweiten Teil eines Abweisbleches (9), der dazu bestimmt ist, mit einer Bedachung (T) zusammenzuwirken;
wobei das Abweisblech (1) verformbar ist und eine außenseitige Trägerschicht (3) umfasst, die halbstarr (3) und verformbar ist, wobei die außenseitige Trägerschicht (3) eine Haftfläche aufweist, die auf die Bedachung (T) gerichtet ist, auf der eine innenliegende Haftschicht (5) aufgebracht ist, die aus einem Material besteht, das konfiguriert ist, um an der Bedachung (T) zu haften, so dass die Haftschicht (5) des zweiten Teils des Abweisbleches (9), der dazu bestimmt ist, mit der Bedachung (T) zusammenzuwirken, mindestens teilweise mit einer temporären Schutzfolie (13) bedeckt ist, wobei diese temporäre Schutzfolie (13) dazu bestimmt ist, von der Haftschicht (5) abgelöst zu werden,
**dadurch gekennzeichnet, dass** die Haftschicht (5) des ersten Teils des Abweisbleches (7) mindestens teilweise mit einer permanenten Passivierungsschicht (11) bedeckt ist, wobei die permanente Passivierungsschicht (11) dehnbar ist und irreversibel an der Haftschicht (5) befestigt ist.

2. Abweisblech (1) nach Anspruch 1, **dadurch gekennzeichnet, dass** die außenseitige Trägerschicht (3) aus mindestens einer Folie oder einer halbstarren Trame besteht, die geeignet ist, um sich in mindestens einer Richtung zu verlängern, und vorzugsweise aus mindestens einer gekreppten Aluminiumfolie.

3. Abweisblech (1) nach einem der Ansprüche 1 oder 2, **dadurch gekennzeichnet, dass** die Haftschicht (5) die Haftfläche auf mindestens 50 % der gesamten Oberfläche der Haftfläche bedeckt, insbesondere auf mindestens 90 % der gesamten Oberfläche der Haftfläche.

4. Abweisblech (1) nach einem der Ansprüche 1 bis 3, **dadurch gekennzeichnet, dass** die permanente Passivierungsschicht (11) zwischen 20 und 80 % der Haftfläche bedeckt.

5. Abweisblech (1) nach einem der Ansprüche 1 bis 4, **dadurch gekennzeichnet, dass** die permanente Passivierungsschicht (11) aus einer Folie besteht, die bis zu mindestens 100 % ihrer Anfangslänge streckbar ist, ohne zu reißen.

6. Abweisblech (1) nach einem der Ansprüche 1 bis 5, **dadurch gekennzeichnet, dass** die temporäre Schutzfolie (13) die permanente Passivierungsschicht (11) teilweise bedeckt.

7. Abweisblech (1) nach einem der Ansprüche 1 bis 6, **dadurch gekennzeichnet, dass** die außenseitige Trägerschicht (3) konfiguriert ist, um gegen ultraviolette Strahlen beständig zu sein und lackiert zu werden.

8. Dichtungsvorrichtung (D), die dazu bestimmt ist, eine dichte Verbindung herzustellen, wenn sie mit einer Bedachung (T) in Form einer Abdeckkappe, eines Wandanschlussprofils, einer Aufkantung, einem Formstück, einer Einfassung oder einem Tragrahmen eines Photovoltaikmoduls zusammenwirkt, wobei die Dichtungsvorrichtung (D) ein Abweisblech (1) nach einem der Ansprüche 1 bis 7 umfasst und einen starren Körper (15), der mit dem Abweisblech (1) im Bereich des ersten Teils des Abweisbleches (7) dicht verbunden ist.

9. Dichtungsvorrichtung (D) nach Anspruch 8, **dadurch gekennzeichnet, dass** der starre Körper (15) Mittel zum Befestigen des Abweisbleches (1) umfasst, die Zähne (17) umfassen, die zum Anheften des Abweisbleches (1) an den starren Körper (15) im Bereich des ersten Teils des Abweisbleches (7) konfiguriert sind, wobei jeder Zahn (17) ein festes Ende umfasst, das mit dem starren Körper (15) verbunden ist, und ein freies Ende, das zum Anheften des Abweisbleches (1) konfiguriert ist, und wobei der starre Körper (15) Befestigungsöffnungen (19) umfasst, die konfiguriert sind, um den Durchgang der freien Enden der Zähne (17) zu ermöglichen, so dass die Montage durch Anheften des ersten Teils des Abweisbleches (7) an den starren Körper (15) mittels der Zähne (17) erfolgt.

10. Verfahren zur Ausführung einer Dichtungsvorrichtung (D) auf einer Bedachung (T), wobei das Verfahren umfasst:
- einen Schritt des Bereitstellens eines starren Körpers (15), der mit mindestens einem Abweisblech (1) nach einem der Ansprüche 1 bis 7 verbunden ist;
- einen Schritt des Positionierens des starren Körpers (15) und des Abweisbleches (1) auf der Bedachung (T);
- einen Schritt des Entfernens der temporären Schutzfolie (13);
- einen Schritt des Anbringens des Abweisbleches (1) auf der Bedachung (T) im Bereich des zweiten Teils des Abweisbleches (9), um das Abweisblech (1) auf die Bedachung (T) zu haften, gemäß einer komplementären Form der Bedachung (T).

## Claims

1. A head guard (1) comprising a first head guard portion (7) intended to cooperate at least partially with an external rigid body (15), and a second head guard portion (9) intended to cooperate with a roof (T);
said head guard (1) being deformable and comprising an outer support layer (3) which is semi-rigid (3) and deformable, said outer support layer (3) having an adhesion face directed towards the roof (T) on which is deposited an inner adhesion layer (5) consisting of a material configured to adhere to the roof (T), such as the adhesion layer (5) of the second head guard portion (9) intended to cooperate with the roof (T) is covered at least partially with a temporary protective film (13), this temporary protective film (13) being intended to be detached from the adhesion layer (5),
**characterized in that** the adhesion layer (5) of the first head guard portion (7) is covered at least partially with a permanent passivation layer (11), the permanent passivation layer (11) being extensible and being irreversibly fastened to the adhesion layer (5).

2. The head guard (1) according to claim 1, **characterized in that** the outer support layer (3) consists of at least one semi-rigid film or weft capable of elongating in at least one direction and, preferably, of at least one crimped aluminum film.

3. The head guard (1) according to any one of claims 1 or 2, **characterized in that** the adhesion layer (5) covers the adhesion face over at least 50% of the total surface of the adhesion face, and more particularly over at least 90% of the total surface of the adhesion face.

4. The head guard (1) according to any one of claims 1 to 3, **characterized in that** the permanent passivation layer (11) covers between 20 and 80% of the adhesion face.

5. The head guard (1) according to any one of claims 1 to 4, **characterized in that** the permanent passivation layer (11) consists of a film that can be stretched up to at least 100% of its initial length without tearing.

6. The head guard (1) according to any one of claims 1 to 5, **characterized in that** the temporary protective film (13) partially covers the permanent passivation layer (11).

7. The head guard (1) according to any one of claims 1 to 6, **characterized in that** the outer support layer (3) is configured to be resistant to ultraviolet rays, and to be painted.

8. A sealing device (D) intended to achieve a watertight junction when it cooperates with a roof (T) in the form of a seal, a flashing, a ridge, a connector, a flashing assembly, or a photovoltaic panel supporting frame, said sealing device (D) comprising a head guard (1) according to any one of claims 1 to 7, and a rigid body (15) secured in a sealed manner with the head guard (1) at the first head guard portion (7).

9. The sealing device (D) according to claim 8, **characterized in that** the rigid body (15) comprises means for fastening the head guard (1) which comprise teeth (17) configured to staple the head guard (1) to the rigid body (15) at the first head guard portion (7), each tooth (17) comprising a fixed end secured to the rigid body (15), and a free end configured to staple the head guard (1), and the rigid body (15) comprising fastening openings (19) configured to allow the passage of the free ends of the teeth (17), such that the assembly is carried out by stapling the first head guard portion (7) to the rigid body (15) by means of said teeth (17).

10. A method for implementing a sealing device (D) on a roof (T), the method comprising:
- a step of providing a rigid body (15) secured to at least one head guard (1) according to any one of claims 1 to 7;
- a step of positioning the rigid body (15) and the head guard (1) on the roof (T);
- a step of removing the temporary protective film (13);
- a step of applying the head guard (1) to the roof (T) at the second head guard portion (9) so as to adhere the head guard (1) to the roof (T) in a shape that is complementary to the roof (T).
